Europäisches Patentamt

European Patent Office

Office européen des brevets

(11) Publication number: **0 094 778**
A1

# (12) EUROPEAN PATENT APPLICATION

(21) Application number: 83302605.7

(22) Date of filing: 09.05.83

(51) Int. Cl.³: **G 01 P 5/00**

(30) Priority: 19.05.82 GB 8214568

(43) Date of publication of application:
23.11.83 Bulletin 83/47

(84) Designated Contracting States:
DE FR GB IT

(71) Applicant: WESTLAND plc

Yeovil Somerset(GB)

(72) Inventor: Doe, Reginald Alan
Old Court Cottage Church Lane
Misterton Somerset(GB)

(74) Representative: Jack, Bruce James et al,
FORRESTER & BOEHMERT Widenmayerstrasse 4/1
D-8000 Munchen 22(DE)

(54) On board helicopter airspeed indicating apparatus.

(57) On board helicopter airspeed indicating apparatus for indicating the theoretical airspeed of a helicopter in which it is fitted includes computing means for receiving electrical signals representative of various operating parameters and for computing a signal representative of a theoretical airspeed, and indicating means responsive to the signal for indicating the airspeed. The computing means processes the signals iteratively using an empirically derived main rotor disc efficiency factor to provide the representative signal.

In one embodiment, the apparatus includes resolving means adapted to resolve the representative signal into fore, aft and lateral components to provide a resultant signal representative of a theoretical forward airspeed. Preferably the resolving means is adapted to perform a further iterative computer process utilising an empirically derived tail rotor disc efficiency factor.

EP 0 094 778 A1

./...

FIG.8

Description of Invention

Title: "On Board Helicopter Airspeed Indicating Apparatus"

THIS INVENTION relates to on board helicopter airspeed indicating apparatus particularly for use in indicating the airspeed of a helicopter at the low end of an overall speed range.

Our prior Patent Specification GB-A-2037688 describes a helicopter airspeed indicating system in which a theoretical airspeed is calculated using measured weight and power values and a known relationship between the power, weight and airspeed characteristics of the helicopter in which it is to be fitted. Tests on an aircraft simulator have shown that that system is capable of providing useful indications of the airspeed of the helicopter by computational means only; however, the tests also showed that inaccuracies occurred in the airspeed calculations especially during simultaneous motions along two axes.

The reasons for this are thought to be inaccuracies in the measurement of parameters used and in resolving the power transfer process taking place during such helicopter motions. The first of these problems can be solved by using more accurate sensing methods; however, regarding the equations used, it is considered that interaction occurs due to the reliance on a number of distinct efficiency factors to apportion thrust and power to the various aircraft motions.

Accordingly, in one aspect, the invention provides on board helicopter airspeed indicating apparatus for indicating the theoretical airspeed of a helicopter in which it is fitted and including computing means for receiving electrical signals representative of various operating parameters and for computing a signal representative of a theoretical airspeed, and indicating means responsive to said signal for indicating said airspeed, characterised in that said computing means processes said signals iteratively using an empirically derived disc efficiency factor to provide said signal representative of theoretical airspeed.

The apparatus may include comparator means for comparing a main rotor disc incidence with a predetermined value and may be adapted to select automatically an appropriate one of two iterative processes to be performed by said computing means.

Preferably, the apparatus includes transformation means adapted to transform accelerations along helicopter axes on to earth axes.

In another aspect, the invention provides on board helicopter airspeed indicating apparatus for indicating the theoretical airspeed of a helicopter in which it is fitted, including computing means for receiving and processing electrical signals representative of various operating parameters thereby to provide a signal representative of a theoretical airspeed, and indicating means responsive to said signal for indicating said airspeed, characterised in that said computing means processes said signals iteratively using an empirically derived main rotor disc efficiency factor to provide a signal representative of a non-directional theoretical airspeed, and includes resolving means adapted to resolve said signal into fore, aft and lateral components to provide a resultant signal representative of a theoretical forward airspeed, said indicating means responding to this signal to indicate said forward airspeed.

The resolving means may be adapted to perform a further iterative computer process utilising an empirically derived tail rotor disc efficiency factor.

The invention will now be described by way of example only and with reference to the accompanying drawings in which,

Figure 1 is a diagram showing helicopter reference axes,

Figure 2 is a main rotor velocity diagram,

Figure 3 is a main rotor force diagram,

Figure 4 is a tail rotor velocity diagram,

Figure 5 is a diagram illustrating earth and helicopter accelerations,

Figure 6 is a diagram illustrating pitch transformation,

Figure 7 is a diagram illustrating roll transformation,

Figure 8 is a logic diagram of a process used in apparatus according to the embodiment of the invention, and

Figure 9 is a logic diagram of a process used in apparatus according to a further embodiment.

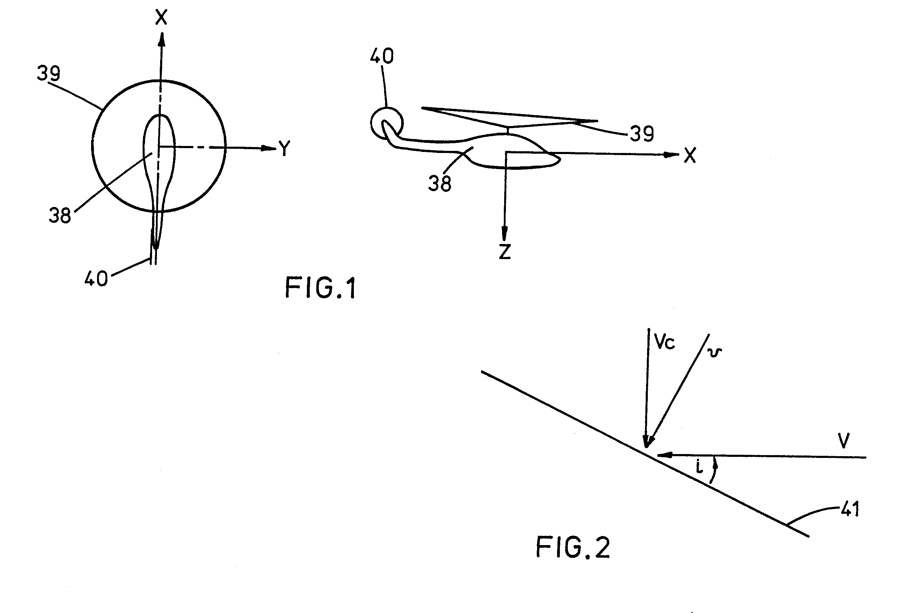

Figure 1 includes plan and side elevations of a helicopter 38 having a single main sustaining rotor 39 and an anti-torque rotor 40. In Figure 2, the main rotor disc tip path plane is indicated at 41.

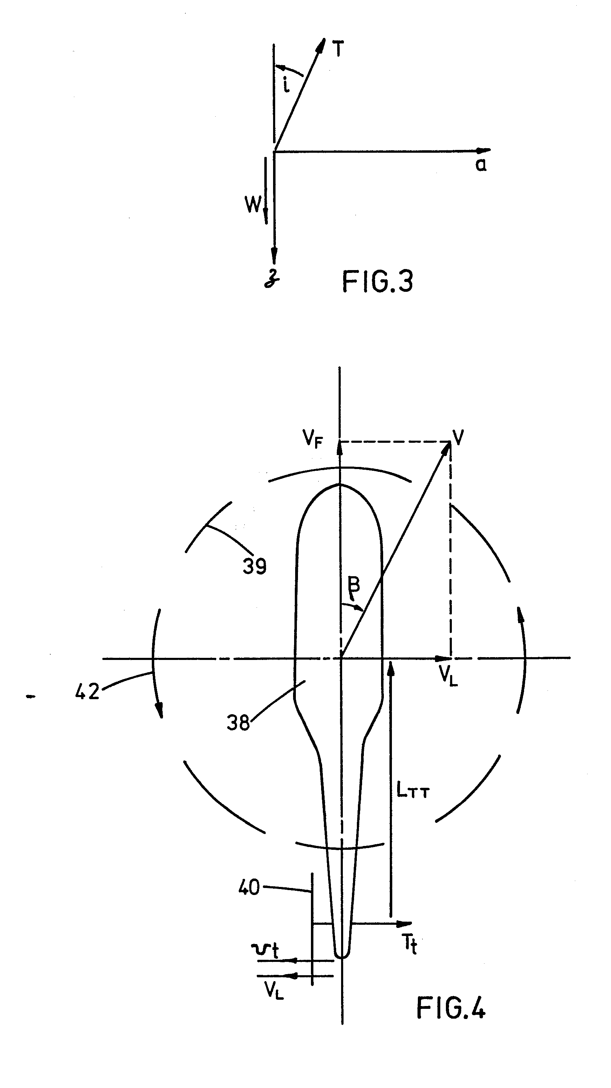

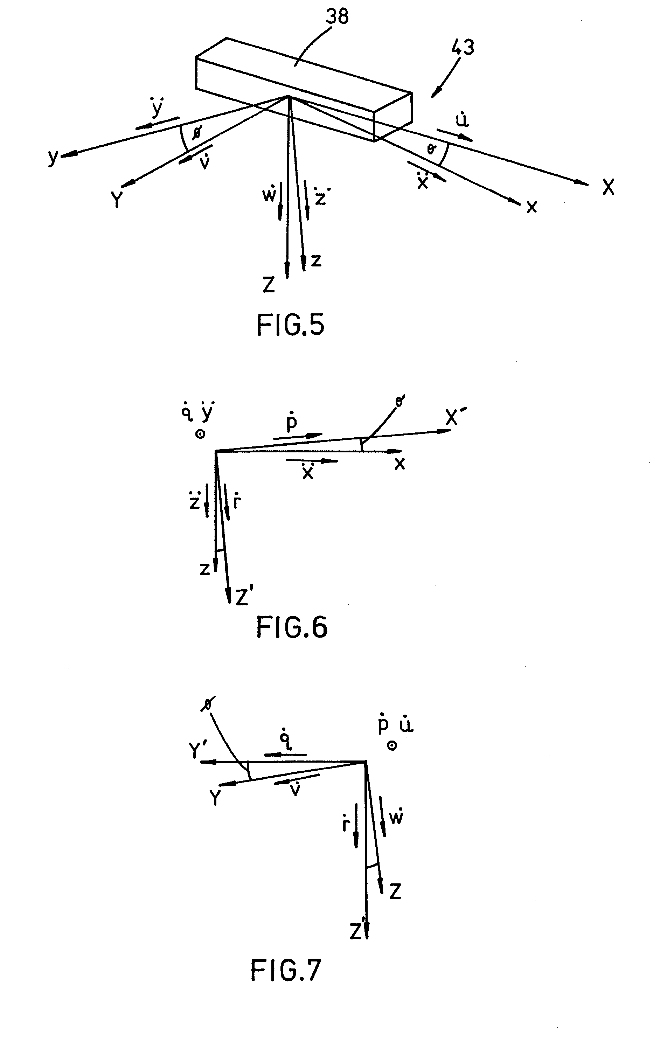

Figure 4 is a further plan view of the helicopter of Figure 1 in which the direction of rotation of the main sustaining rotor 39 is indicated by arrows 42. In Figure 5, the helicopter 38 is shown schematically and with its forward end indicated at 43.

The helicopter airspeed indicating apparatus of this invention computes airspeed from power and acceleration signals by an inversion of the forward flight induced power equation. The equations used arise from simple actuator disc theory, and the method relies on a generalised thrust efficiency factor together with a disc incidence equation to apportion thrust and power to the various helicopter motions.

The thrust efficiency factor is experimentally determined for a particular helicopter and will, in general, be a function of airspeed. This necessitates the use of an iterative process since the calculated airspeed is used to up-date the efficiency factor which results in a different calculated airspeed.

The equations used in the system of this invention and hereinafter described are arranged in such a way as to produce a well behaved convergence onto the solution. For helicopter motion which involves very small horizontal accelerations, the disc incidence is assumed to be zero, and a simpler set of equations are used. These equations are also solved iteratively since they employ a common thrust efficiency factor, but they are capable of producing a solution much more quickly.

Various symbols appearing in the following description have the meanings set out below:-

|  |  | Units |
|---|---|---|
| $T$ | Main rotor thrust | N |
| $i$ | disc incidence | rad |
| $W$ | all-up weight | N |
| $V$ | horizontal airspeed | knots |
| $\upsilon$ | main rotor induced velocity | m/sec |
| $V_c$ | rate of climb | m/sec |
| $P_M$ | main rotor power | W |
| $P_T$ | total engine power | W |
| $P_A$ | auxiliary power | W |
| $P_t$ | tail rotor power | W |
| $P_I$ | main rotor induced power | W |

| $P_p$ | main rotor profile power | W |
|---|---|---|
| $P_\Omega$ | rotor acceleration power | W |
| $\bar{V}$ | total velocity normal to disc | m/sec |
| $e$ | main rotor disc efficiency factor | - |
| $\rho$ | fluid density | kg/m³ |
| $A$ | disc area | m² |
| $V_T$ | total velocity through disc | m/sec |
| $T_t$ | tail rotor thrust | N |
| $Q_A$ | main rotor torque | Nm |
| $\sigma$ | atmospheric relative density | - |
| $L_{TT}$ | tail rotor moment arm | m |
| $\beta$ | angle of sideslip | rad |
| $N_F$ | fuselage and fin yawing movement as a function of sideslip | Nm |
| $V_L$ | lateral airspeed | knots |
| $V_F$ | forward airspeed | knots |
| $P_{IT}$ | tail rotor induced power | W |
| $P_{Pt}$ | tail rotor profile power | W |
| $\bar{V}_t$ | total velocity normal to tail disc | m/sec |
| $\upsilon t$ | tail rotor induced velocity | m/sec |
| $e_t$ | tail disc efficiency factor | - |
| $A_t$ | tail disc area | m² |
| $V_{Tt}$ | total velocity through tail disc | m/sec |
| $X,Y,Z$ | helicopter axes | - |
| $x,y,z$ | earth axes | - |
| $\dot{u},\dot{v},\dot{w}$ | accelerations along helicopter axes | m/sec² |
| $\dot{p},\dot{q},\dot{r}$ | accelerations along transformed helicopter axes | m/sec² |
| $\ddot{x},\ddot{y},\ddot{z}$ | accelerations along earth axes | m/sec² |
| $\ddot{a}$ | acceleration along direction of motion | m/sec² |
| $\partial$ | acceleration due to gravity | m/sec² |

Referring now to Figures 1, 2 and 3, the following equations are used in the system of this invention.

Assuming drag forces are zero, and evaluating forces horizontally and vertically;

$$T \cos i - w = -\frac{W}{g}\ddot{z}$$

and

$$T \sin i = \frac{W}{g}\ddot{x}$$

which gives $T = W \left[ 1 - 2\frac{\ddot{z}}{g} + \frac{(\ddot{x}^2 + \ddot{y}^2 + \ddot{z}^2)}{g^2} \right]^{1/2}$ $\qquad$ ........(1)

Making small angle assumptions,

$$i = \tan i = \frac{(\ddot{x} + \ddot{y})^{1/2}}{g - \ddot{z}} \qquad ........(2)$$

Now, examining power relationships,

$$P_M = P_T - P_A - P_t$$

and

$$P_I = P_M - P_p - P_\Omega$$

also $P_I = T\bar{V}$

which gives: $\bar{V} = \dfrac{P_X}{T} = \dfrac{P_M - P_p - P_\Omega}{T} = \dfrac{P_T - P_A - P_t - P_p - P_\Omega}{T}$ $\qquad$ ........(3)

Resolving velocities normal to the rotor disc (Figures 1 to 3) we obtain $\bar{V} = \upsilon + V \sin i + Vc \cos i$

and making small angle assumptions

$$\upsilon = V - Vc - iV \qquad ........(4)$$

The induced velocity $\upsilon$ is unknown, therefore use is made of another thrust equation from actuator disc theory,

$$T = 2e\rho A V_T \upsilon \qquad ........(5)$$

where $e$ is an empirically derived disc efficiency factor which encompasses the differences between the simple theory and the real situation. $V_T$ is found by considering the airflow through the disc.

The total velocity parallel to the disc,

$$V_p = V \cos \iota - V_C \sin \iota$$

and summing the vector velocities,

$$V_T{}^2 = V_p{}^2 + \overline{V}{}^2$$

hence

$$V_T{}^2 = (V \cos \iota - V_C \sin \iota)^2 + \overline{V}{}^2$$

and making small angle assumptions,

$$V_T = \left[ \overline{V}{}^2 + (V - \iota V_C)^2 \right]^{\frac{1}{2}} \qquad \qquad \ldots\ldots\ldots(6)$$

Equations (1) to (6) in conjunction with an empirically derived formula for $e$ (disc efficiency factor) provide sufficient information to solve for the airspeed $V$. In order to solve those equations where both $V$ and $\upsilon$ are unknown, an iterative process is used which alternately solves equations (5) and (6) until a solution for $V$ is converged upon.

In instances where, during operation, $\iota < 0.01$ radians it can be assumed to be zero, and this results in a simplification of the equation as follows,

$$\upsilon = \overline{V} - V_C \qquad \qquad \ldots\ldots\ldots(7)$$

$$V = \left[ \left( \frac{T}{2 e \varsigma A \upsilon} \right)^2 - V_C{}^2 - V^2 - 2 \upsilon V_C \right]^{\frac{1}{2}} \qquad \ldots\ldots\ldots(8)$$

It will be noted that equation (8) is a direct expression for $V$ where $\upsilon$ is known; however, it still contains the disc efficiency factor and must be solved iteratively until a solution for $V$ is converged upon.

In practice, the various parameters used by the system of this invention, i.e. disc efficiency factor, main rotor profile power etc.

will be calculated from the design features of the particular helicopter in which the system is to be installed. For test purposes, the parameters were derived from helicopter data from a flight dynamics simulator for a particular helicopter in trimmed straight and level flight and at 19000lb weight.

The empirically derived formula for $e$ (disc efficiency factor) is, therefore, helicopter specific and must be modified in order to tune the system before or during flight trials. The particular formulae used in tests are,

$$e = 0 \cdot 709 + 0 \cdot 036 V, \quad V < 30 \, \text{KNOTS}$$
$$e = 0 \cdot 817 \qquad\qquad , \quad V \geqslant 30 \, \text{KNOTS}$$

It will be noted that equations (1) and (2) above make use of the helicopter accelerations $\ddot{x}, \ddot{y}$ & $\ddot{z}$ measured on earth axes and, since the helicopter instrumentation provides accelerations along helicopter axes, these must be transformed onto earth axes, and the method of resolving this transformation will now be described with reference to Figures 5, 6 and 7.

Consider the two sets of orthogonal axes shown in Figure 5. $X, Y, Z$ are the helicopter axes with corresponding accelerations $\dot{u}, \dot{v}$, and $\dot{w}$. $x, y, z$ are the earth axes offset by pitch $\theta$ and roll $\phi$ and with corresponding accelerations $\ddot{x}, \ddot{y}$ and $\ddot{z}$.

The transformation is best considered as two simple transformations, one for pitch and one for roll. Considering firstly the pitch transformation (Figure 6) from $(x, y, z)$ to $(X', Y', Z')$, the accelerations along $X', Y', Z'$ are $\dot{p}, \dot{q}$, and $\dot{r}$. Considering now the roll transformation (Figure 7) from $X', Y', Z'$ to $X, Y, Z$ the accelerations along $X, Y, Z$ are $\dot{u}, \dot{v}$ and $\dot{w}$.

Thus, the overall transformation is,

$$\ddot{x} = \dot{u} \cos \theta + (V \sin \phi + \dot{w} \cos \phi \sin \theta)$$
$$\ddot{y} = \dot{v} \cos \phi - \dot{w} \sin \phi$$
$$\ddot{z} = (\dot{v} \sin \phi + \dot{w} \cos \phi) \cos \theta - v \sin \theta$$

The system hereinbefore described calculates a non-directional value of horizontal airspeed $V$. In a further embodiment now to be described, this value is then resolved into its fore, aft and lateral components by calculating the lateral airspeed ($V_L$) and hence the forward airspeed ($V_F$) using the formulae described below. The equations are derived from classical actuator disc theory although various assumptions have been made in order to simplify the mathematics whilst adequately representing the tail rotor behaviour.

The assumptions are,

1. The tail rotor thrust is only required to balance the main rotor torque and the fuselage/fin yawing moment due to sideslip. The work done in overcoming fuselage drag is assumed to be supplied by the main rotor only and this introduces a small error into the main rotor calculation especially at high lateral speeds.

2. The tail rotor profile power is assumed to be constant, which is a more restrictive assumption than in the case of the main rotor due to the much larger range of collective pitch being used which leads to significant changes in blade drag coefficient.

3. The tail rotor thrust equation includes an empirical disc efficiency factor (as does the main rotor equation) which encompasses the differences between the theory and the real situation around the tail rotor and enables the system to be tuned to obtain correct solutions at points within the low airspeed envelope. The tail rotor disc efficiency factor is intended to include the effects of fuselage/fin blockage and main rotor downwash and is represented as a piecewise linear function of forward airspeed. This assumption is considered to be more tenuous in respect of the tail rotor because of flow corruption by the tail structure and main rotor downwash.

Figure 4 illustrates the velocity diagram used in the tail rotor calculations.

The tail rotor thrust $T_t$ must balance the main rotor torque and any yawing due to sideslip and is given by,

$$T_t = \frac{-Q_A + \sigma N_F(\beta)V^2}{L_{TT}} \qquad \ldots\ldots\ldots(9)$$

and the sideslip angle

$$\beta = \tan^{-1}\left(\frac{V_L}{V_F}\right)$$

Examining power relationships,

$$P_{It} = P_t - P_{pt}$$
$$= T_t \bar{V}_t \quad \cdots\cdots\cdots(10)$$

Assuming the tail rotor disc tip path plane lies parallel to the fore/aft axis of the helicopter and assuming yaw rate is zero, we obtain

$$\bar{V}_t = V_L + \upsilon_t$$
$$\text{i.e.} \quad V_L = \bar{V}_t - \upsilon_t \cdots\cdots\cdots(11)$$

The tail rotor induced velocity $\upsilon_t$ is given by another thrust equation,

$$T_t = 2 e_t \rho A_T V_{Tt} \upsilon_t$$

where
$$V_{Tt}^2 = \bar{V}_t^2 + V_F^2 + V_C^2$$

giving
$$\upsilon_t = \frac{T_t}{2 e_t A_t \rho (\bar{V}_t^2 + V_F^2 + V_c^2)^{1/2}} \quad \cdots\cdots\cdots(12)$$

Substituting (9), (10) and (12) into (11) gives an expression for the lateral airspeed

$$V_L = \frac{P_{It} L_{TT}}{\sigma N_F (\beta) V^2 Q_A} - \frac{\sigma N_F (\beta) V^2 Q_A}{2 L_{TT} e_t \rho A_t (\bar{V}_t^2 + V_F^2 + V_C^2)^{1/2}} \cdots\cdots\cdots(13)$$

The empirically derived formula for the tail rotor disc efficiency factor ($e_t$) used in the simulator is,

$$e_t = 0.45 + 0.0294 V_F, \quad V_F < 13.6 \, \text{KNOTS}$$
$$e_t = 0.85 \quad\quad\quad\quad V_F \geq 13.6 \, \text{KNOTS}$$

As for the main rotor calculation hereinbefore described, this equation will be subject to modification in order to tune the system for a specific helicopter. Values for the fuselage and fin yawing moments which are functions of the sideslip angle are obtained from empirically derived look-up tables, which again are helicopter specific.

The tail rotor calculation of this embodiment is implemented as an addition to the main rotor calculation.

Examining equation (13) where the total airspeed $V$ is assumed to be a constant passed from the main rotor calculation and where $\beta$, $V_F$ and $et$ are all functions of $V_L$ we see that we have an equation of the form,

$$V_L = f\,(V_L)$$

which is also solved using an iterative process similar to the previous embodiment.

The fore/aft airspeed is calculated as the vector difference between the total airspeed and the lateral airspeed, i.e. $V_F = (V^2 - V_L^2)\tfrac{1}{2}$

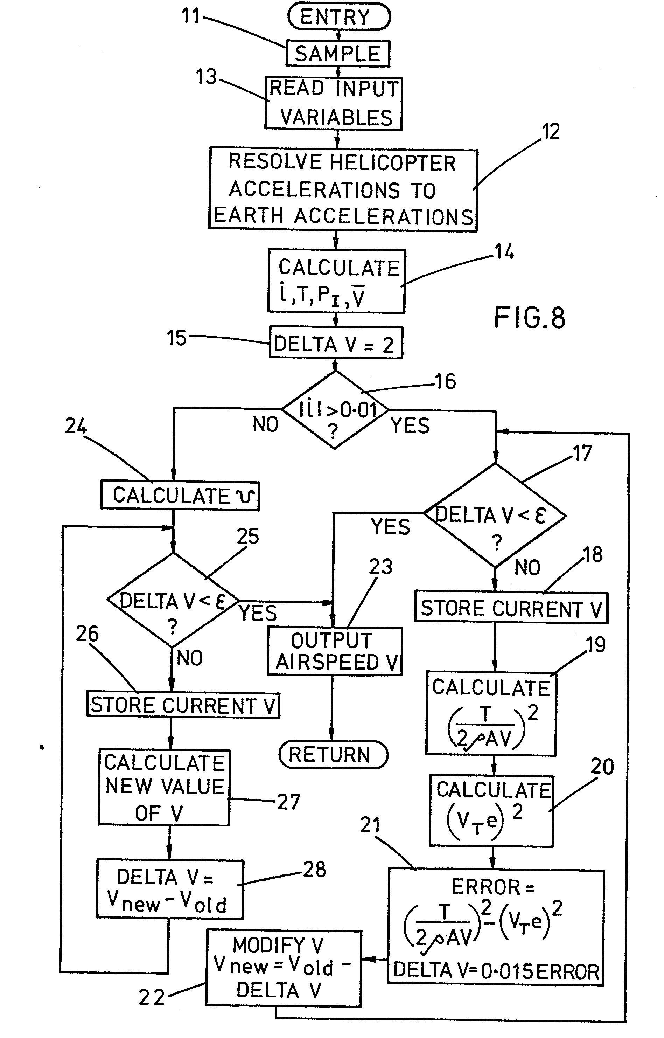

Operation of the first embodiment will now be described with reference to Figure 8.

After system start up, a function at block 11 provides for a sample of airspeed to be taken at any desired interval to provide the desired airspeed update rate, sampling three times per second having been chosen in the illustrated embodiment. Signals representative of accelerations along helicopter axes obtained from helicopter instrumentation are used at 12 to calculate $\ddot{x}, \ddot{y}$ & $\ddot{z}$ representing a transformation onto earth axes.

Signals representative of various helicopter operating parameters are obtained from appropriate sources and are fed into the system at 13. These signals include signals representative of $T$, $W$, $\vartheta$, $P_M$, $P_T$, $P_A$, $P_t$ $P_p$ & $P_\Omega$ , and these are processed at block 14 to calculate values of $i$, $T$, $P_I$ & $V$ (equations 1, 2 and 3).

An arbitrary value identified as Delta $V$ is introduced into the system at 15, and in the illustrated embodiment a value of 2 knots has been selected.

A comparator function 16 considers the disc incidence ($i$) to determine which of two iterative processes is used in the following procedure. Assuming, firstly, that $i$ is greater than 0.01 radians, a signal is passed to comparator block 17 which determines whether or not the value of Delta $V$ is within an arbitrary value $\varepsilon$ . The value of $\varepsilon$ could for example be 0.01 knots.

Assuming that the comparison function at 17 is not satisfied, so that the value for $V$ being processed is not sufficiently accurate, the value of $V$ is stored at 18 and becomes the preceding value i.e. $V_{old}$ in the following iteration process.

Calculating functions 19 and 20 serve respectively to calculate separate values of $(V_T e)^2$ . In function 19 this value is derived from equation (5) i.e. $(V_T e)^2 = \dfrac{T}{2\varsigma A_\upsilon}$ and in function 20 the value is derived from equation (6) and utilises the empirically derived factor $e$ .

An error value consisting of the difference between the calculated values of $(V_T e)^2$ of functions 19 and 20 is established at 21, and a new value of Delta $V$ is established and is represented by a pre-determined constant (equal to 0.015 in one particular example) times the error value.

Function 22 establishes a new value for $V$ i.e. $V_{new}$ which is represented as the difference between $V_{old}$ and Delta $V$ . The loop then reverts to comparator block 17 which again determines whether or not Delta $V$ which has been established at 21, is within the arbitrary value $\varepsilon$ . If it is not satisfied then the value of $V_{new}$ established at 22 is not sufficiently accurate and the process is repeated.

When the function of block 17 is satisfied, the value of $V_{new}$ established at 22 is within a predetermined accuracy of the actual airspeed, and that value is passed to indicator 23 for display to the pilot.

Reverting now to the comparator function 16, if this requirement is not satisfied, i.e. if the disc incidence $\iota$ is less than 0.01 radians, the following procedure is applied automatically.

Calculating function 24 serves to calculate the main rotor induced velocity $\upsilon$ from equation (7). Comparator 25 then determines whether a value of Delta $V$ is within a preselected arbitrary value $\varepsilon$ , and if it is then the value of $V$ being processed is considered sufficiently accurate and is passed to indicator 23 for display. If, however, this function is not satified, then the following iterative process is established and the value of $V$ being processed is stored at block 26 and becomes $V_{old}$ .

A new value of $V$ , i.e. $V_{new}$ is then calculated at function 27 using equation (8), and a new value of Delta $V$ is established at block 28 and is equal to $V_{new} - V_{old}$ . This value of Delta $V$ is again compared with the arbitrary value $\varepsilon$ at function 25 and, if the function is satisfied, the value $V_{new}$ calculated at 27 is considered sufficiently accurate and is passed to indicator 23 for display.

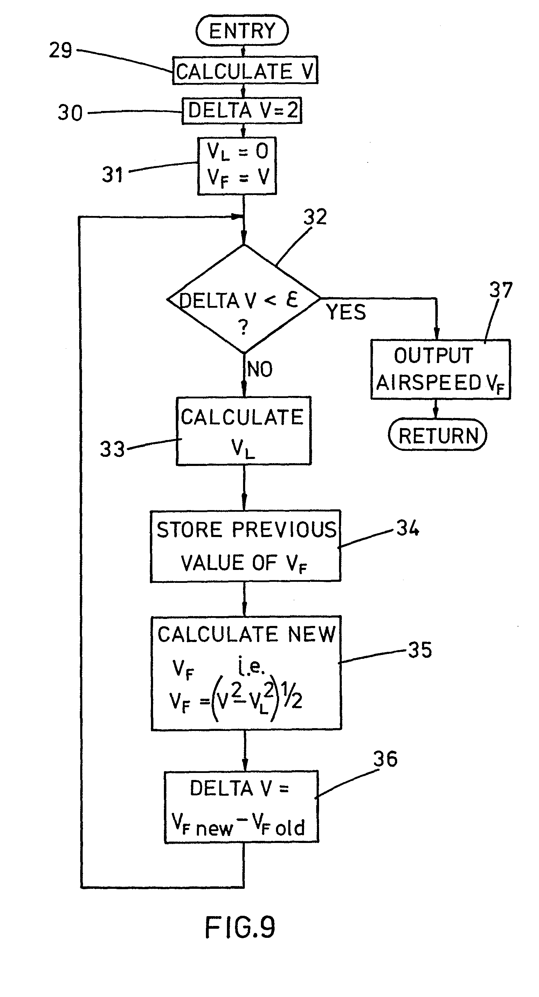

Operation of the aforementioned further embodiment will now be described with reference to the flowchart of Figure 9.

The value of airspeed calculated as hereinbefore described is assumed to be a constant and input at 29, and an arbitrary figure is established at 30 to allow the first iteration. Initial estimates in respect of $V_L$ and $V_F$ are established at 31, and a comparator block 32 establishes whether a value identified as Delta $V$ is within an arbitrary value $\varepsilon$ .

If this requirement is not satisfied, a calculating function 33 calculates $V_L$ using equation (13). A previous value of $V_F$ is stored at 34 becoming $V_{F\,old}$ , and a new value of $V_F$ is calculated at function 35. A new value of Delta $V$ (i.e. $V_{F\,new} - V_{F\,old}$) is established at 36 and this value is then compared again at function 32 to determine whether or not it is less than $\varepsilon$ . If it is not then the process is repeated to establish a new value of $V_F$ and, consequently, of Delta $V$ .

When the requirement of function 32 is satisfied, the value of $V_F$ calculated at 35 is considered sufficiently accurate and is passed to indicator 37 for display.

CLAIMS

1. On board helicopter airspeed indicating apparatus for indicating the theoretical airspeed of a helicopter in which it is fitted and including computing means for receiving electrical signals representative of various operating parameters and for computing a signal representative of a theoretical airspeed, and indicating means responsive to said signal for indicating said airspeed, characterised in that said computing means processes said signals iteratively using an empirically derived disc efficiency factor to provide said signal representative of theoretical airspeed.

2. Apparatus as claimed in Claim 1, further characterised by comparator means for comparing a main rotor disc incidence with a pre-determined value and adapted to select automatically an appropriate one of two iterative processes to be performed by said computing means.

3. Apparatus as claimed in Claim 1 or 2, further characterised by transformation means adapted to transform accelerations along helicopter axes on to accelerations along earth axes.

4. On board helicopter airspeed indicating apparatus for indicating the theoretical airspeed of a helicopter in which it is fitted, including computing means for receiving and processing electrical signals representative of various operating parameters, thereby to provide a signal representative of a theoretical airspeed, and indicating means responsive to said signal for indicating said airspeed, characterised in that said computing means processes said signals iteratively using an empirically derived main rotor disc efficiency factor to provide a signal representative of a non-directional theoretical airspeed, and includes resolving means adapted to resolve said signal into fore, aft and lateral components to provide a resultant signal representative of a theoretical forward airspeed, said indicating means responding to this signal to indicate said forward airspeed.

5. Apparatus as claimed in Claim 4, further characterised in that said resolving means is adapted to perform further iterative computer process utilising an empirically derived tail rotor disc efficiency factor.

FIG.1

FIG.2

0094778

FIG.3

FIG.4

0094778

FIG.5

FIG.6

FIG.7

FIG.8

0094778

0094778

```
                    ( ENTRY )
         29 ──────┤ CALCULATE V │
         30 ──────┤ DELTA V = 2 │
                    │ V_L = 0   │
         31 ──────┤ V_F = V    │
                          │
                          ▼        32
                      ╱  DELTA V < ε  ╲ ── YES ──────────┐        37
                      ╲      ?       ╱                    ▼
                          │ NO              │ OUTPUT      │
                          ▼                 │ AIRSPEED V_F│
              33 ──┤ CALCULATE │              │
                   │    V_L    │                 ▼
                          │                  ( RETURN )
                          ▼
                  │ STORE PREVIOUS │── 34
                  │ VALUE OF V_F   │
                          │
                          ▼
                  │ CALCULATE NEW  │── 35
                  │ V_F    i.e.    │
                  │ V_F = (V² - V_L²)½ │
                          │
                          ▼
                  │ DELTA V =      │── 36
                  │ V_F new - V_F old │
```

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | GB-A-2 037 688 (WESTLAND AIRCRAFT LTD.) * Page 3, lines 35-42; figure 2 * | 1,4 | G 01 P 5/00 |
| A | GB-A-1 518 571 (REYROLLE PARSONS LTD.) * Page 1, lines 37-65; figure 1 * | 1,2,4 | |
| A | FR-A-2 282 644 (ETAT FRANCAIS) * Page 2, lines 3-26 * | 1,4 | |
| A | GB-A- 899 860 (NORTH AMERICAN AVIATION) * Page 2, lines 12-35; figure 1 * | 1,4 | |

TECHNICAL FIELDS
SEARCHED (Int. Cl. ³)

G 01 P

The present search report has been drawn up for all claims

| Place of search | Date of completion of the search | Examiner |
|---|---|---|
| THE HAGUE | 18-08-1983 | HANSEN P. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82